# EUROPEAN PATENT APPLICATION

(11) **EP 2 778 918 A2**
(43) Date of publication of application: **17.09.2014**
(21) Application number: 14151261.6
(22) Date of filing: 15.01.2014
(51) Int. Cl.: G06F 9/50, G06F 12/14

(54) **Information processing apparatus, program, and memory area allocation method**

(30) Priority: 14.03.2013 JP 2013052471
(71) Applicant: FUJITSU LIMITED, Kawasaki-shi, Kanagawa 211-8588 (JP)
(72) Inventor: Kondou, Hiroshi, Kanagawa, 211-8588 (JP)
(74) Representative: HOFFMANN EITLE

(57) **Abstract**

A processing apparatus includes a plurality of memories and a plurality of processors coupled to the plurality of memories and configured to determine, in accordance with a demand for allocation of a memory area of a first size to store first data used by an operating system, whether or not a memory area of a third size may be secured for each of the plurality of memories, the third size being obtained by adding the memory area of the first size and a memory area of a second size to store data used by an application program, and to store the first data in a first memory among the plurality of memories in a case where the first memory is determined to be capable of securing the memory area of the third size.

## Description

### TECHNICAL FIELD

The embodiments discussed herein are related to an information processing apparatus, a program, and a memory area allocation method.

### BACKGROUND ART

A large-scale computer system is configured by coupling a plurality of nodes provided with a processor, a memory, and the like. For example, there is a non-uniform memory access (NUMA) architecture in which a plurality of nodes are coupled and a processor of each node shares a memory of each node.

An NUMA computer system having the NUMA architecture employed has a different access performance to a memory in accordance with the positions of processors and the memory. An NUMA computer system accesses a memory close to a processor at a lowest latency, and accesses a memory far from the processor at a relatively high latency. In an operating system (OS) of such an NUMA computer system, it is desired to arrange data used by an application program in a memory close to a processor to process the application program. As a related art, for example, there is Japanese Laid-open Patent Publication No. 2002-140229.

### SUMMARY

### TECHNICAL PROBLEM

However, there may be a case where it is not possible to arrange the data used by the application program in the memory close to the processor to process the application program. For example, there may be a case where it is not possible to store data used by an application program since the OS and various types of data used by the OS are memorized in a memory close to a processor to process the application program so that there are no vacancies in the memory area. For example, in an NUMA computer system, a processor of each node is capable of accessing all shared memories. Therefore, in the NUMA computer system, the size of memory space becomes greater and the size of, for example, data for management, such as a page table, used by the OS also becomes greater. In the NUMA computer system, there may be a case where there is no free area since the data for management is memorized in a memory area of a particular memory so that it may not be possible to store the data used by an application program. In this case, the data used by the application program turns out to be stored in a memory far from a processor to process the application program, and thus the processing performance of the application program decreases.

### SOLUTION TO PROBLEM

According to an aspect of the invention, an apparatus includes a plurality of memories and a plurality of processors coupled to the plurality of memories and configured to determine, in accordance with a demand for allocation of a memory area of a first size to store first data used by an operating system, whether or not a memory area of a third size may be secured for each of the plurality of memories, the third size being obtained by adding the memory area of the first size and a memory area of a second size to store data used by an application program, and to store the first data in a first memory among the plurality of memories in a case where the first memory is determined to be capable of securing the memory area of the third size.

### ADVANTAGEOUS EFFECTS OF INVENTION

It is desirable to provide an information processing apparatus, a program, and a memory area allocation method that may suppress a decrease in processing performance of an application program.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

FIG. 1 illustrates the entire configuration of an information processing apparatus;
FIG. 2 illustrates one example of a functional configuration of a building block;
FIG. 3 schematically illustrates one example of a configuration of a CPU chip;
FIG. 4 illustrates one example of a data configuration of size information;
FIG. 5 illustrates a relationship between hardware and software in an information processing apparatus;
FIG. 6 illustrates an access latency in an information processing apparatus;
FIG. 7 illustrates one example of configuration information obtained from a hypervisor;
FIG. 8 illustrates one example of usage of a memory area of each memory in a group;
FIG. 9 schematically illustrates one example of a flow of startup of an OS; and
FIG. 10 is a flowchart illustrating a procedure of memory area allocation process.

### DESCRIPTION OF EMBODIMENTS

Detailed descriptions are given below to embodiments of an information processing apparatus, a program, and a memory area allocation method according to embodiments of the present disclosure based on the drawings. Embodiments of the present disclosure are not limited by these embodiments. Then, it is possible to appropriately combine each embodiment without contradicting the process contents.

### First embodiment

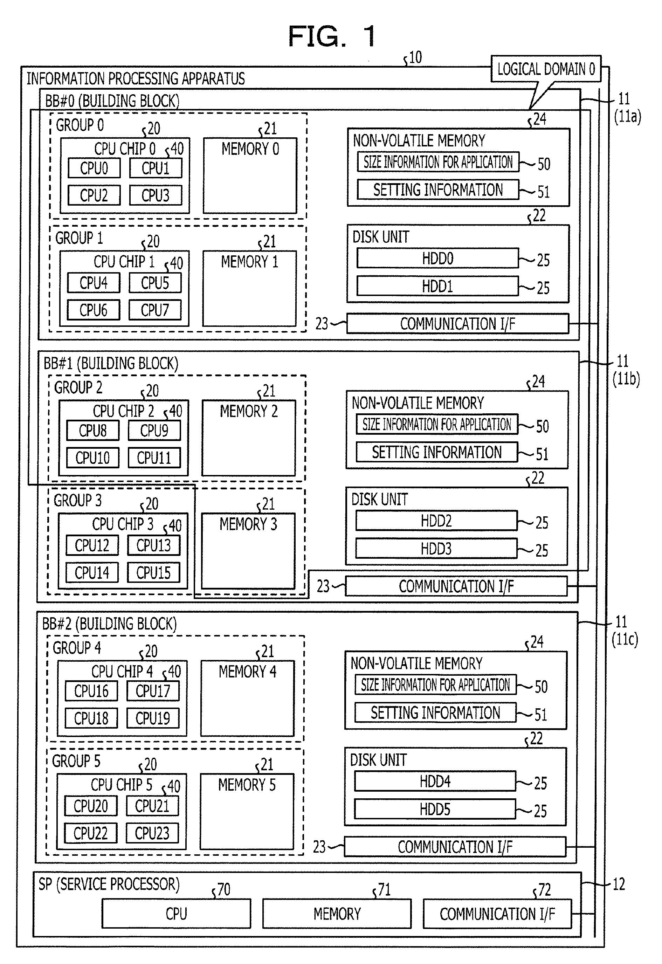

An information processing apparatus 10 according to the first embodiment is described. FIG. 1 illustrates the entire configuration of an information processing apparatus. The information processing apparatus 10 has a plurality of building blocks 11 and a service processor (SP) 12. The building blocks 11 are also referred to as "system boards" and "nodes". For the information processing apparatus 10 according to the present embodiment, an NUMA architecture is employed. The plurality of building blocks 11 and the service processor 12 are coupled by a global crossbar switch, a local area network (LAN), and the like described later and it is possible to access each other. Although the example of FIG. 1 illustrates a case of coupling three building blocks 11 (11a, 11b, and 11c) for simplification, the number of building blocks 11 is not limited to this. The building blocks 11 may be modified in proportion to the size of the computer system, and for example, 16 or 32 of them are coupled.

Each building block 11 respectively has hardware that may run the OS independently. Each building block 11 respectively has a plurality of CPU chips 20, a plurality of memories 21, a disk unit 22, a communication interface (I/F) 23, and a non-volatile memory 24. The building blocks 11a, 11b, and 11c have approximately similar hardware configurations. Although the example of FIG. 1 illustrates a case where the building blocks 11 respectively have two CPU chips 20 and two memories 21 for simplification, the number of CPU chips 20 and memories 21 are not limited to this.

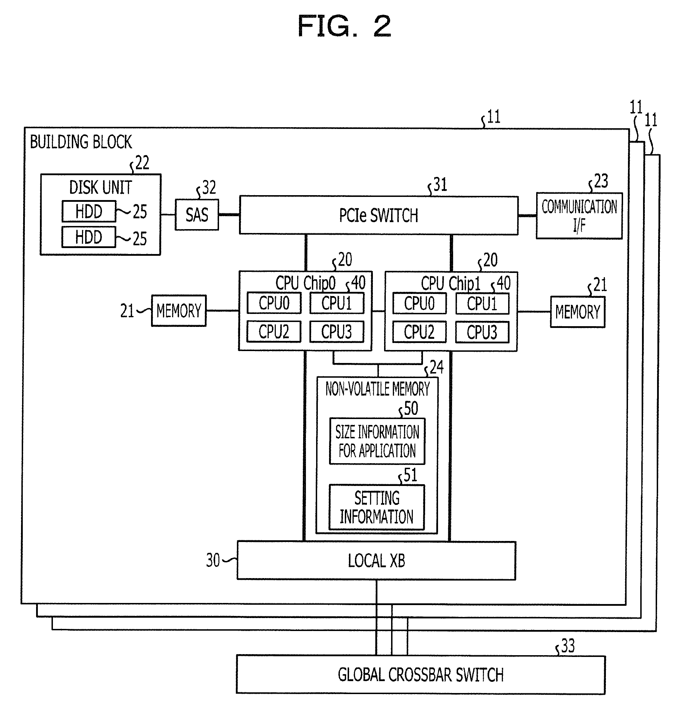

Here, using FIG. 2, a configuration of such building block 11 is described. FIG. 2 illustrates one example of a functional configuration of the building blocks. In the example illustrated in FIG. 2, the building block 11 has the plurality of CPU chips 20, the plurality of memories 21, a local crossbar (XB) 30, and a peripheral component interconnect express (PCIe) switch 31. In addition, the building block 11 also has the communication I/F 23 to be coupled to the LAN, a serial attached SCSI (SAS) 32, the disk unit 22, and the non-volatile memory 24.

The plurality of CPU chips 20 are coupled to each other. Although the example of FIG. 2 illustrates a case of two CPU chips 20, in a case of four CPU chips 20 for example, respective CPU chips 20 are cross-coupled directly to other CPU chips 20, respectively. Although FIG. 2 is an example of directly coupling the respective CPU chips 20, the configuration may also couple the CPU chips 20 to each other via, for example, the local XB 30.

The respective CPU chips 20 are coupled to the memories 21 individually. Although the respective CPU chips 20 are coupled to one memory 21 in the example of FIG. 2, the respective CPU chips 20 may also be coupled to a plurality of memories. In addition, each CPU chip 20 is also coupled to the non-volatile memory 24 via a bus. Still in addition, each CPU chip 20 is also coupled to the local XB 30. The local XB 30 is coupled to a global crossbar switch 33. Yet in addition, each CPU chip 20 is also coupled to the PCIe switch 31. The PCIe switch 31 is coupled to the communication I/F 23. In addition, the PCIe switch 31 is also coupled to the disk unit 22 via the SAS 32.

In the example illustrated in FIG. 2, for example, the CPU chips 20 are processors to execute arithmetic processing. The CPU chips 20 have a plurality of CPU cores, and each CPU core functions as a CPU 40. In the example of FIG. 2, the CPU chips 20 respectively have four CPUs 40. Although the example of FIG. 2 illustrates a case where the CPU chips 20 have the respective four CPUs 40 for simplification, the number of CPUs 40 is not limited to this. In a case where each CPU core of the CPU chips 20 runs a plurality of threads and the respective threads function as CPUs, each thread corresponds to the CPU 40.

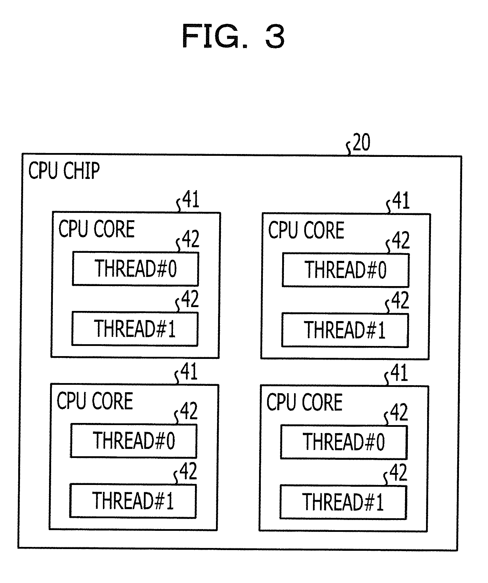

FIG. 3 schematically illustrates one example of a configuration of a CPU chip. The CPU chip 20 has four CPU cores 41. In the example of FIG. 3, each CPU core 41 is equipped with two threads 42 that may execute arithmetic processing, respectively, as hardware. The threads 42 are also referred to as "strands". In a where that the threads 42 respectively function as a CPU, each thread 42 corresponds to the CPU 40.

Going back to FIG. 2, each CPU 40 is interconnectingly coupled to the CPUs 40 of other building blocks 11 via the local XB 30 and the global crossbar switch 33 to utilize each memory 21 and the memories 21 of other building blocks 11 as shared memories. For example, each CPU 40 has a node map that associates a physical address with a CPU ID as an identification of a CPU coupled to a memory that is assigned the physical address. In a case where the CPU ID of the physical address to be accessed indicates a CPU 40 in a different building block 11, each CPU 40 sends a request for memory access to the other building block 11 via the local XB 30 and the global crossbar switch 33. In addition, in a case where the CPU ID associated with the physical address to be accessed indicates another CPU 40 in the same building block 11, each CPU 40 also sends a request for memory access via direct coupling between the CPUs. That is, in a case where the CPU ID associated with the physical address to be accessed indicates a CPU 40 other than the current CPU 40 and also a CPU present in the same building block 11, each CPU 40 sends a request for memory access via direct coupling between the CPUs.

In addition, in a case of receiving a request to the a memory 21 coupled to the current CPU 40 from another building block 11, the CPU 40 reads data to be requested out of the memory 21 coupled to the CPU 40 and sends the data to the requestor.

The memories 21 are memories to memorize data to be utilized by the OS and an application and are, for example, a dual in-line memory module (DIMM). The memories 21 included in each building block 11 are assigned physical addresses mapped to an identical physical address space, and are used in a shared manner by the plurality of CPUs 40. That is, physical addresses having unique values are allocated to all memories included in the information processing apparatus 10. In the memories 21, a part of the memory area may be a shared area shared by all CPUs 40 included in the information processing apparatus 10.

The local XB 30 is a switch to forward packets sent and received between the plurality of CPUs 40 that are included in the plurality of building blocks 11. The global crossbar switch 33 is a switch to forward packets between each building block 11. The global crossbar switch 33 dynamically selects a route of data sent and received between each building block 11 and also forwards the data. The local XB 30 sends a packet issued by a CPU 40 specifying a CPU 40 in another building block 11 as a destination to the CPU 40 in the destination building block 11 via the global crossbar switch 33.

The PCIe switch 31 is a switch to control an access from each CPU chip 20 to an I/O device and the like coupled via a PCIe slot. The communication I/F 23 is a LAN adaptor to couple a LAN and the building blocks 11. The SAS 32 is an adaptor for LAN and SAS mounted to the PCIe slot, and relays coupling of the disk unit 22 with each CPU 40. Although the building blocks 11 have the disk unit 22 in the present embodiment, embodiments are not limited to this and a disk unit may also be disposed outside the building blocks 11 by applying a technique of storage area network (SAN) or the like.

The disk unit 22 is a device to have a built-in hard disk drive (HDD) and to memorize various types of information. Although the present embodiment illustrates a case where the disk unit 22 has respective two HDDs 25, the number of HDDs 25 is not limited to this. The disk unit 22 memorizes various programs, such as an OS, a hypervisor, and firmware.

The non-volatile memory 24 is a memory that is referred to in startup of the information processing apparatus 10. In the non-volatile memory 24, a startup control program to control startup of the OS is memorized. Examples of the startup control program may include, for example, open boot PROM (OBP). The OBP has, for example, a function of starting up and configuring the OS from an external storage device or a network.

In addition, the non-volatile memory 24 also memorizes various types of data used for control of allocation of a memory area in startup. For example, the non-volatile memories 24 memorize size information 50 for an application program and setting information 51.

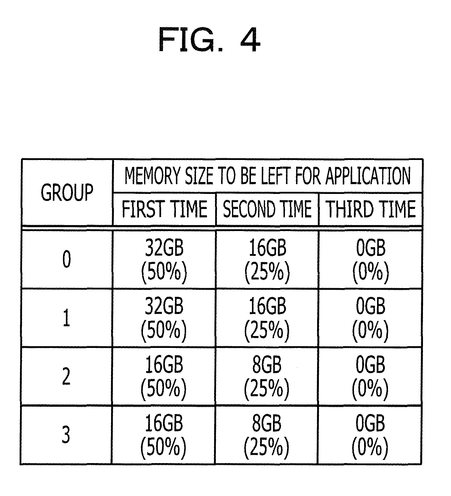

The size information 50 for an application program is data having a size of memory area to be secured for an application program memorized therein. FIG. 4 illustrates one example of a data configuration of the size information for an application program. As illustrated in FIG. 4, the size information 50 for an application program has each item of "group", and "memory size to be left for application program". The item of group is an area to memorize group numbers to group the memories. The item of memory size to be left for an application program is an area to memorize a size of memory area to be secured for an application program in the memory of the group of the group number. In the present embodiment, in a case where there is no memory in the group capable of securing a memory area for an application program, determination is carried out three times by reducing the size of memory area for an application program. The item of memory size to be left for an application program is divided into "the first time", "the second time", and "the third time" to memorize the respective sizes of memory area for an application program used for the determination in three times. The example of FIG. 4 illustrates that the memory in the group "1" has a size of memory area to be secured for an application program of 32 GB for the first time, 16 GB for the second time, and 0 GB for the third time.

The setting information 51 is data having settings related to whether or not to secure a memory area for an application program regarding a group not including the CPU 40 memorized therein.

Here, a group having no CPU 40 present therein also does not have a CPU 40 to run an application program and does not have to secure a memory area for an application program in order to suppress a decrease in processing performance. However, the information processing apparatus 10 has a possibility of modifying a logical domain or dynamically adding a CPU 40 to a group not including a CPU 40 using a function of dynamic reconfiguration (DR). It is preferred for the information processing apparatus 10, even regarding a group having no CPU 40 present therein, to secure a memory area for an application program in a case of dynamically adding a CPU 40 to the group. With that, the information processing apparatus 10 is designed to enable setting of whether or not to secure a memory area for an application program regarding a group not including the CPU 40 in the setting information 51. This enables a system administrator to modify whether to secure a memory area for an application program by an operation of the system. For example, in a case of securing a memory area for an application program even regarding a group having no CPU 40 present therein, the administrator sets a size of memory area to be secured even regarding a group having no CPU 40 present therein in the size information 50 for an application program. In addition, the administrator also carries out settings to secure a memory area for an application program in the setting information 51. This enables the information processing apparatus 10 to secure a memory area for an application program even regarding a group having no CPU 40 present therein. In addition, in a case of not adding a CPU 40 to a group having no CPU 40 present therein, the administrator may also avoid securing a memory area for an application program in a group having no CPU 40 present therein by carrying out settings not to secure a memory area in the setting information 51.

Going back to FIG. 1, the service processor 12 has a CPU 70, a memory 71, and a communication I/F 72, and carries out management control for the entire information processing apparatus 10. For example, the service processor 12 carries out power management, reset, modification of an operation mode, settings for adding or deleting a node, collection of an error log, and the like of each building block 11.

The information processing apparatus 10 according to the first embodiment is considered to be capable of setting logical domains by dividing the resources into logical groups. For example, in the example of FIG. 1, a logical domain 0 is set with the building block 11a and the "CPU chip 2", the "memory 2", the "memory 3", and the "disk unit" of the building block 11b. In each building block 11, various programs are loaded to the memories 21 to be run. For example, in each building block 11, a hypervisor is loaded to the memories 21 to be run. The hypervisor runs the logical domain as a virtualization machine to run the OS for each virtualization machine. In the example of FIG. 1, one OS is run in the logical domain 0. The OS is multiprocessor configuration compliant and runs on any CPU 40 in the logical domain. In a case of setting the logical domain in such a manner, each memory 21 in the logical domain is assigned a physical address mapped to an identical physical address space, and may be used in a shared manner from the CPUs 40 in the logical domain.

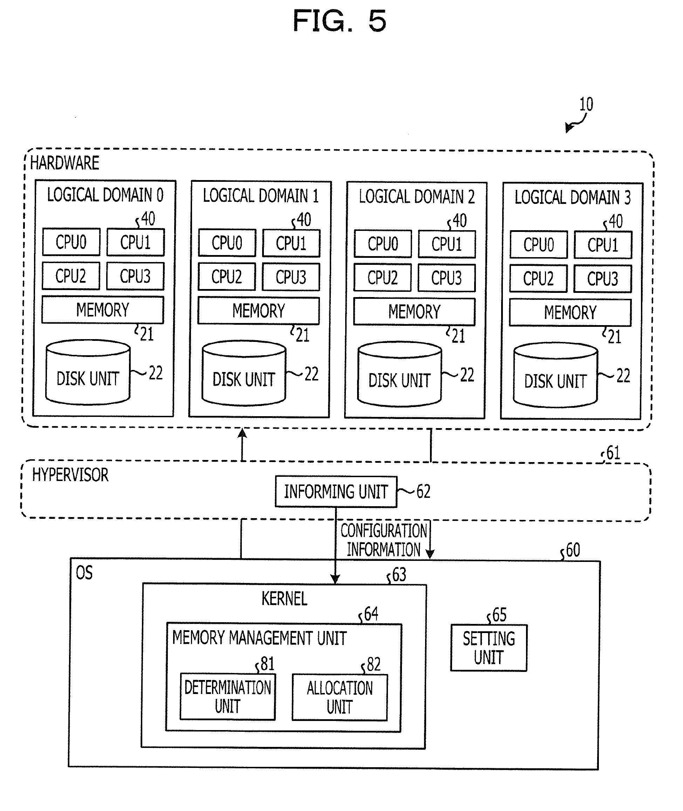

FIG. 5 illustrates a relationship between hardware and software in the information processing apparatus 10. In the example illustrated in FIG. 5, hardware of the information processing apparatus 10 is considered to be divided into logical domains 0 through 3. In addition, in the example of FIG. 5, hardware of each logical domain is illustrated by being simplified, and only the four CPUs 40, the memory 21, and the disk unit 22 are illustrated respectively as the hardware of the logical domains 0 through 3. Still in addition, the example illustrated in FIG. 5 illustrates a hypervisor 61 and an OS 60 as software.

The hypervisor 61 runs the logical domains 0 through 3 as respective virtualization machines. The OS 60 accesses the hardware of the logical domain on which the OS 60 runs via the hypervisor 61. The OS 60 has a kernel 63 and a setting unit 65. A memory management unit 64 may also be a separate program, not being a part of the kernel 63. The kernel 63 is a program to be a core of the OS 60, and has an interruption processing unit, a process management unit, the memory management unit 64, a file management unit, and the like to provide basic functions as the OS 60. The memory management unit 64 manages the memory space of the memories 21 to be used in a shared manner and carries out allocation of a memory area as demanded. The setting unit 65 is a program to set the size information 50 and the setting information 51. The system administrator sets, in the size information 50, a size of memory area to be secured for an application program in each group using the setting unit 65. In addition, the system administrator also sets whether or not to secure a memory area for an application program regarding a group not including the CPU 40 in the setting information 51 using the setting unit 65.

The hypervisor 61 understands a resource configuration of the information processing apparatus 10, and is capable of understanding an access latency of each memory 21 for the CPU chips 20 from the resource configuration that is defined as the logical domain. For example, such CPU chip 20 is capable of directly accessing a memory 21 coupled to the CPU chip 20. Therefore, the directly coupled memory 21 has a low access latency. In contrast, the CPU chip 20 accesses a memory 21 coupled to a CPU chip 20 in another building block 11 via the local XB 30 and the global crossbar switch 33. Therefore, the memory 21 in another building block 11 has a high access latency. In contrast, the CPU chip 20 accesses a memory 21 coupled to another CPU chip 20 in the same building block 11 via another CPU chip 20. Therefore, the memory 21 coupled to another CPU chip 20 in the same building block 11 has a medium access latency.

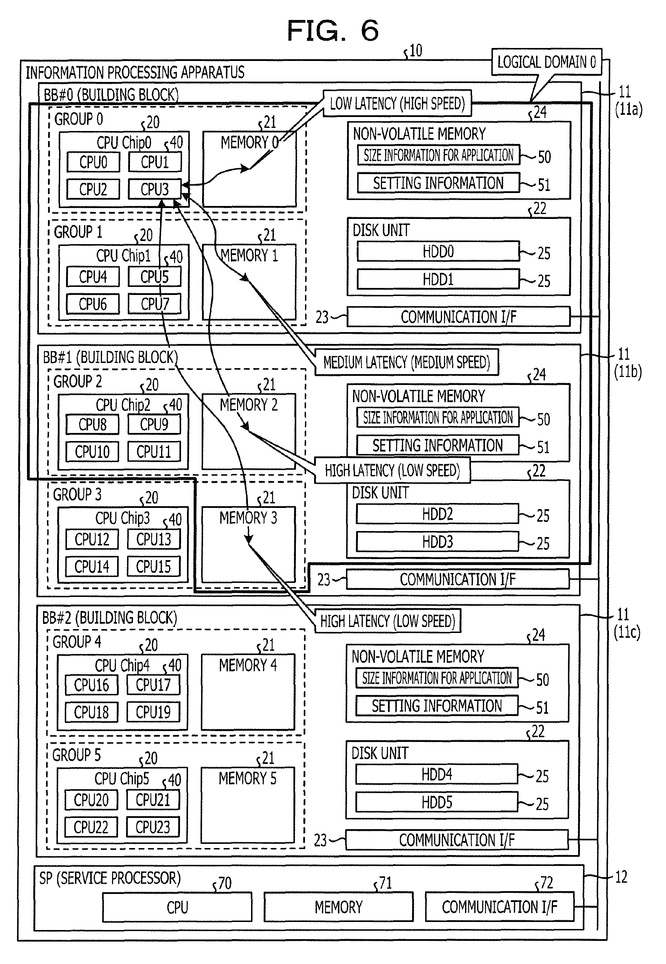

FIG. 6 illustrates an access latency in an information processing apparatus. The example of FIG. 6 illustrates an access latency of the building block 11a of the information processing apparatus 10 illustrated in FIG. 1 from the "CPU chip 0". The CPU chip 20 of the "CPU chip 0" is capable of directly accessing the memory 21 of the "memory 0", so that the latency is low. In contrast, the CPU chip 20 of the "CPU chip 0" accesses the memory 21 of the "memory 2" and the "memory 3" in the building block 11b via the local XB 30 and the global crossbar switch 33, so that the latency is high. In contrast, the CPU chip 20 of the "CPU chip 0" accesses the memory 21 of the "memory 1" in the building block 11a via another CPU chip 20, so that the latency becomes medium.

Going back to FIG. 5, the hypervisor 61 may inform of configuration information of resources for each group to group each memory 21 in the logical domains. For example, the hypervisor 61 has an informing unit 62 to inform of configuration information of the resources for each group. The hypervisor 61 manages the configuration information of the resources for each group to group each memory 21 in the logical domains. For example, the hypervisor 61 manages the configuration information of the resources taking a respective memory 21 having a lowest access latency for each CPU chip 20 as a respective separate group. In the example of FIG. 1, the memories 21 directly coupled to each CPU chip 20 are grouped as respective separate groups. In addition, the hypervisor 61 also manages the configuration information of the resources taking memories 21 having no coupled CPU chip 20 present therein as respective separate groups. For example, in the example of FIG. 1, the "CPU chip 0" and the "memory 0" are considered to be in the group 0. In addition, the "CPU chip 1" and the "memory 1" are considered to be in a group 1. Still in addition, the "CPU chip 2" and the "memory 2" are considered to be in a group 2. Yet in addition, the "memory 3" is considered to be in a group 3. The informing unit 62 informs of the group number of the group, the CPUs 40 included in the group, the base address of the memory 21, and the size of the memory 21 as the configuration information of the resources for each group as demanded.

In the present embodiment, in the information processing apparatus 10 sharing the memories 21 of each building block 11, a memory placement optimization (MPO) is implemented in the OS 60 to be executed. Here, the MPO is refers to a function of optimizing arrangement of data used by an application program on the memories. The OS having the MPO implemented therein arranges the data used by an application program in a memory as close as possible to a processor to run the application program. This enables the application program to have an improved memory access performance because the data is arranged in a memory accessible at a low latency.

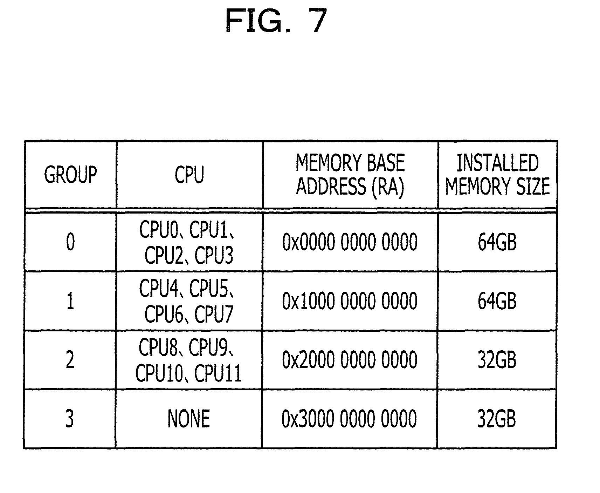

The OS 60 having the MPO implemented therein arranges data used by an application program in the memory 21 as close as possible to a processor to run the application program in a case of loading the application program into any of the memories 21 and running the application program. For example, the OS 60 demands the configuration information of the group from the hypervisor 61 to obtain the configuration information of the group from the hypervisor 61. FIG. 7 illustrates one example of the configuration information obtained from a hypervisor. In the example of FIG. 7, as the configuration information, the group number of the group, the CPUs 40 included in the group, the base address of the memory 21, and the size of the memory 21 are obtained. The OS 60 arranges the data used by the application program in the memory 21 of the group to which the CPU 40 to run the application program belongs based on the configuration information thus obtained. For example, in FIG. 1, in a case where the application program runs on the "CPU 1", the OS 60 arranges the data in the "memory 0" of the group 0 to which the "CPU chip 0" to run the "CPU 1" belongs. This enables the application program to access data at a low latency.

Next, brief descriptions are given to a flow of startup of an OS in the information processing apparatus 10. In startup of the OS 60, a startup control program memorized in the non-volatile memories 24 is loaded to the memories 21 to be executed. The startup control program loads kernel modules, driver modules, and the like of the OS 60 stored in the disk unit 22 and the like to the memories 21 for execution. The kernel 63, as being executed, sequentially demands allocation of a memory area to store the data used in the OS 60 by specifying the size from the memory management unit 64 as desired to store the data in the memory area allocated by the memory management unit 64. For startup of the OS 60, such allocation of a memory area is carried out a plurality of times.

The information processing apparatus 10 according to the first embodiment shares the memories 21, so that the size of memory space is large. In addition, the information processing apparatus 10 also has a large number of CPUs 40. For example, it is assumed that the information processing apparatus 10 is configured by 32 building blocks 11, each building block 11 has four CPU chips 20, each CPU chip 20 is provided with 16 cores, and each core causes two threads to function as the CPUs 40. In this case, the CPU 40 becomes 32 × 4 × 16 × 2 = 4096. In such a manner, the information processing apparatus 10 according to the first embodiment has a large size of memory space and the large number of CPUs 40 run, so that the size of data for management used by the OS also becomes greater. Therefore, in the information processing apparatus 10, there may be a case where allocation of a memory area becomes intensive in a particular memory 21 and the data for management is concentrated to the particular memory 21. In a case of executing an application program in the particular memory 21, the OS 60 tries to arrange data used by the application program in the particular memory 21. However, in a case where it is not possible to secure a memory area in the particular memory 21, the OS 60 arranges the data used by the application program in a memory 21 far from the processor to run the application program. In this case, data access becomes costly, so that the processing performance of the application program decreases.

With that, the OS 60 according to the present embodiment has a function of allocating an area from a memory 21 having a vacancy for the application program in startup of the OS 60. The memory management unit 64 of the OS 60 has a determination unit 81 and an allocation unit 82.

In a case where the kernel 63 during startup demands allocation of a memory area to store data used by the OS 60 from the determination unit 81 by specifying the size, the determination unit 81 determines whether or not there is a vacancy for an application program in the memories 21 of each group. For example, the determination unit 81 obtains the configuration information of a group illustrated in FIG. 7 from the hypervisor 61. In a case where the OS 60 obtains the configuration information of a group in advance, the determination unit 81 may use the configuration information obtained in advance. The determination unit 81 determines whether or not a memory area of a size obtained by adding a specified size and a size to secure for an application program may be secured in the memories 21 in each group. For example, the determination unit 81 reads a memory size to be left for an application program for the first time for each group memorized in the size information 50 for an application program. Then, the determination unit 81 determines whether or not the memory area of a size obtained by adding the specified size and the memory size to be left for an application program for the first time may be secured in the memories 21 in each group. In a case where there is no memory 21 in a group capable of securing the memory area, the determination unit 81 carries out the determination again by reducing the memory size to be left for an application program. For example, in a case where there is no memory 21 capable of securing a memory area at the determination for the first time, the determination unit 81 carries out determination again by reading a memory size to be left for an application program for the second time in each group out of the size information 50 for an application program. In addition, in a case where there is no memory 21 capable of securing a memory area at the determination for the second time, the determination unit 81 also carries out determination again by reading a memory size to be left for an application program for the third time in each group out of the size information 50 for an application program.

Although a size of memory area to be secured for an application program is defined as a data volume in the size information 50 for an application program in the present embodiment, the size may also be defined as a percentage. For example, the size of memory area to be secured for an application program in the size information 50 for an application program may also be defined as 50% of the memory 21. FIG. 4 illustrates a case of defining the size as a percentage in parentheses. In addition, although the size information 50 for an application program memorizes the size of memory area to be secured for three times in the present embodiment, the size information may also memorize the size of memory area for two times, four times, or more. Still in addition, in a case where respective one size of memory area to be secured for each group is memorized in the size information 50 for an application program and it is not possible to secure the memory area, the determination unit 81 may also repeat determination by reducing the size of memory area to be secured stepwise. Yet in addition, the size of memory area to be secured for an application program does not have to be defined in the size information 50 for an application program. For example, the determination unit 81 carries out determination by obtaining a size to secure for an application program taking the size to secure for an application program as 50% of the memory 21. Then, in a case where it is not possible to secure the memory area, the determination unit 81 may also carry out determination repeatedly by reducing the percentage of the size to secure for an application program stepwise as 40%, 30%, ... of the memory 21.

The allocation unit 82 allocates the memory area based on the determination result of the determination unit 81. For example, the allocation unit 82 allocates the memory area from a memory 21 in the group that is determined to be capable of securing the memory area by the determination unit 81. For example, the allocation unit 82 allocates the memory area of a specified size from the memory 21 in the group determined to be capable of securing the memory area by the determination unit 81. In the allocated memory area, data used by the OS 60 is stored.

In contrast, in a case where there is no memory in the group determined to be capable of securing the memory area as a result of determination by the determination unit 81, the allocation unit 82 cancels the allocation of a memory area to carry out a predetermined error process. Examples of the error process may include, for example, logging a boot failure, informing an administrator of the boot failure, and the like. Thus, the administrator carries out an operation, such as modification of the size of memory area to be secured for an application program set in the size information 50 for an application program, modification of the logical domain, and physical addition of a memory 21, and carries out startup of the OS 60 again.

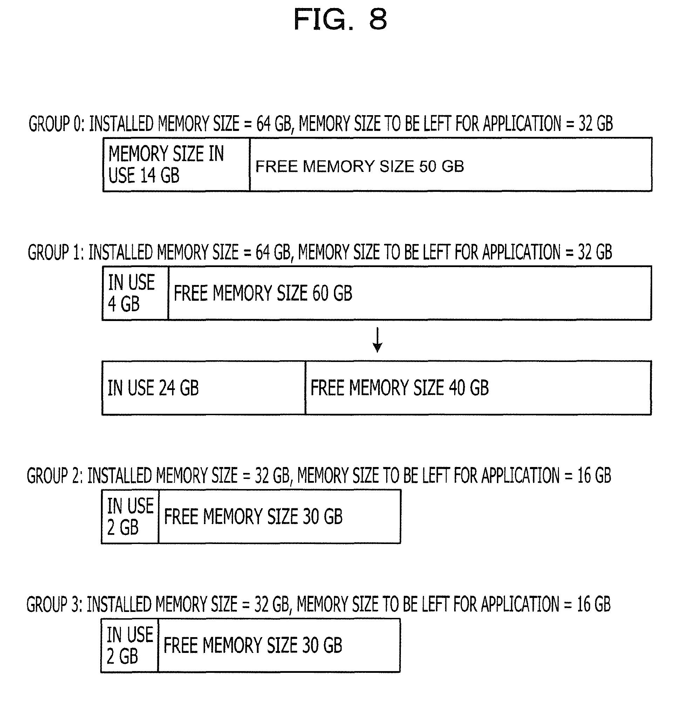

Next, descriptions are given with specific examples. FIG. 8 illustrates one example of usage of an each memory area of each memory in a group. In the example of FIG. 8, it is assumed that the memory 21 in the group 0 has an installed memory size of 64 GB, a used memory size of 14 GB, and a free memory size of 50 GB. In addition, it is assumed that the memory 21 in the group 1 has an installed memory size of 64 GB, a used memory size of 4 GB, and a free memory size of 60 GB. Still in addition, it is assumed that the memory 21 in the group 2 has an installed memory size of 32 GB, a used memory size of 2 GB, and a free memory size of 30 GB. Yet in addition, it is assumed that the memory 21 in the group 3 has an installed memory size of 32 GB, a used memory size of 2 GB, and a free memory size of 30 GB.

It is assumed that the memory management unit 64 accepts a demand of allocation of a memory area with the size of memory area to allocate specified as 20 GB, for example. The determination unit 81 reads the size of memory area to be secured for the first time in each group memorized in the size information 50 for an application program. For example, in a case where the data set in the size information 50 for an application program is in a state illustrated in FIG. 4, the groups 0 and 1 have the memory size of 32 GB to be left for an application program for the first time. The groups 2 and 3 have the memory size of 16 GB to be left for an application program for the first time.

The determination unit 81 determines whether or not a memory area of a size obtained by adding a specified size and a size of memory area to be secured for an application program may be secured in each memory 21 of groups 0 through 3 in order. In the example of FIG. 8, the group 0 has no vacancies of 52 GB, obtained by adding the specified 20 GB and the memory size of 32 GB to be left for an application program for the first time, so that it is determined to be incapable of securing the memory area. In contrast, the group 1 has a vacancy of 52 GB, obtained by adding the specified 20 GB and the memory size of 32 GB to be left for an application program for the first time, so that it is determined to be capable of securing the memory area.

The allocation unit 82 allocates a memory area of a specified size from the memory 21 in the group 1 determined to be capable of securing the memory area. In the memory area thus allocated, data used by the OS 60 is stored. Thus, in the example of FIG. 8, the used memory size of the memory 21 in the group 1 changes from 4 GB to 24 GB.

The information processing apparatus 10 suppresses the concentration of the data used by the OS 60 to a particular memory 21 by starting up the OS 60 while securing the memory area for an application program in such a manner. This enables the OS 60 to arrange the data used by an application program in the memory 21 close to the CPU 40 to run the application program, so that it is possible to suppress a decrease in processing performance of an application program.

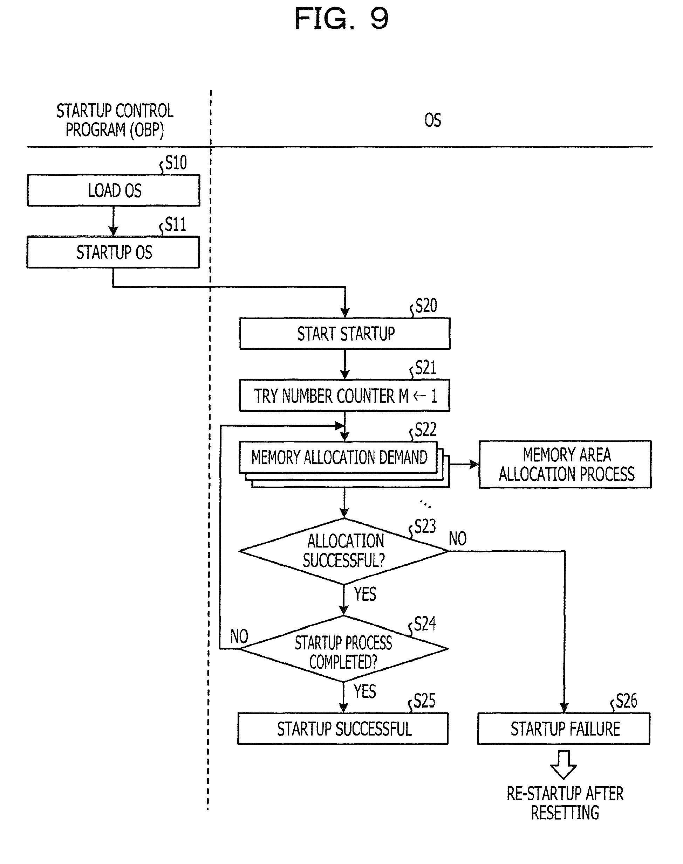

Next, a flow of startup of the OS 60 in the information processing apparatus 10 according to the present embodiment is described. FIG. 9 schematically illustrates one example of a flow of startup of an OS.

As illustrated in FIG. 9, a startup control program loads the OS 60, such as the kernel 63 and the memory management unit 64, memorized in the non-volatile memories 24 and the like to the memories 21 (S10) to execute the OS 60 (S11).

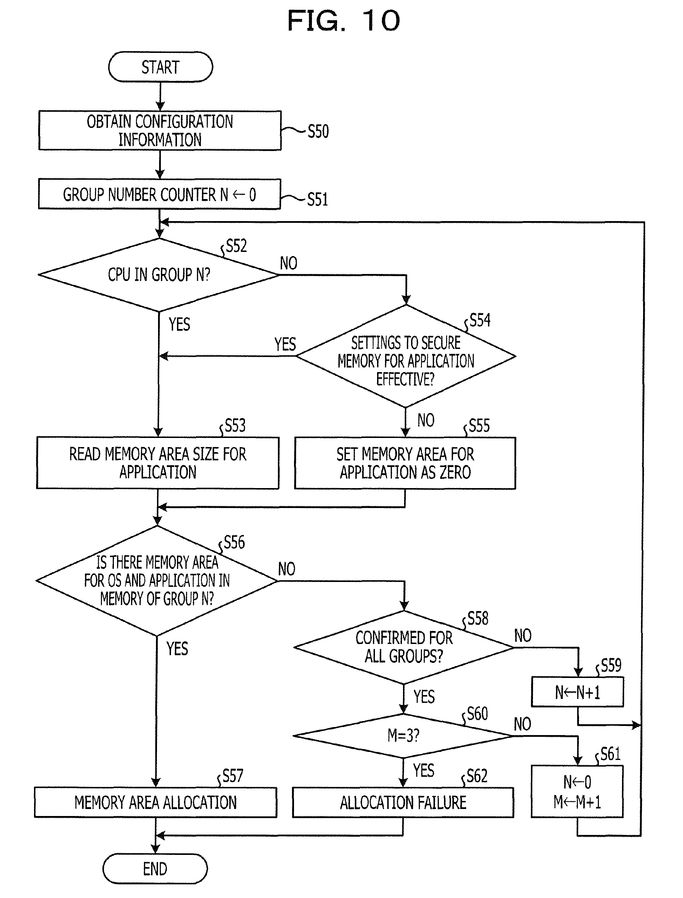

The OS 60 starts startup as being executed (S20), and sets "1" in a try number counter M (S21). Then, the OS 60 continues the startup process and demands allocation of a memory area from the memory management unit 64 by specifying a data size every time the memory area of data used in the OS 60 is desired (S22). The memory management unit 64 executes memory area allocation process (FIG. 10) described later every time allocation is demanded.

The OS 60 determines whether or not the allocation of a memory area is successful every time allocation of a memory area is demanded (S23), and in a case of successful allocation (yes in S23), data used in the OS 60 is stored in the memory area thus allocated. In a case where the startup process is not completed (no in S24), the OS 60 repeatedly carries out the process from S22 in allocation of a memory area, and as the startup process is completed (yes in S24), the process is finished for successful startup (S25).

In contrast, in a case where allocation of a memory area fails (no in S23), the OS 60 carries out predetermined error process and the process is finished for failed startup (S26).

In a case where startup of the OS 60 fails, the administrator carries out an operation, such as modification of a size of memory area to be secured for an application program set in the size information 50 for an application program, modification of the logical domain, and physical addition of a memory 21, and carries out startup of the OS 60 again.

Next, a flow of memory area allocation process in which the information processing apparatus 10 according to the present embodiment carries out allocation of a memory area. FIG. 10 is a flowchart illustrating a procedure of memory area allocation process. The memory area allocation process is executed at the timing of, for example, demanding allocation of a memory area.

As illustrated in FIG. 10, the determination unit 81 obtains configuration information of a group from the hypervisor 61 (S50). The determination unit 81 sets "0" in a group number counter N (S51).

The determination unit 81 determines whether or not an Nth group of the group number counter has a CPU 40 (S52). In a case where there is a CPU 40 (yes in S52), the determination unit 81 reads a size of memory area to be secured for Mth of the try number counter in the Nth group of the group number counter out of the size information 50 for an application program (S53), and the process goes on to S56 described later.

In contrast, in a case where there is no CPU 40 (no in S52), the determination unit 81 determines whether or not a group not including the CPU 40 in the setting information 51 has settings to secure the memory area for an application program (S54). In a case where the group has the settings to secure the memory area (yes in S54), the process goes on to S53 described above. That is, even regarding the group not including the CPU 40, the size of memory area to be secured is read out of the size information 50 for an application program. Thus, as long as the size of memory area is set, the set size is secured for an application even regarding a group not including the CPU 40.

In contrast, in a case where the group does not have settings to secure the memory area (no in S54), the determination unit 81 regards the size of memory area to be secured for an application program as zero (S55), the process goes on to S56 described later.

The determination unit 81 determines whether or not the memory area of a size obtained by adding a specified size and a size to secure for an application program may be secured in the memory 21 in the Nth group of a group number counter (S56). In a case where the memory area may be secured (yes in S56), the allocation unit 82 allocates the memory area of the specified size from the memory 21 in the group determined to be capable of securing the memory area by the determination unit 81 (S57) and the process is finished.

In contrast, in a case where the memory area may not be secured (no in S56), the determination unit 81 determines whether or not confirmation of whether or not the memory areas may be secured is completed for all groups (S58). In the present embodiment, the determination unit 81 determines whether or not the confirmation is completed for all groups by whether or not the value of the group number counter N is "3". In a case where the confirmation is not completed (no in S58), the determination unit 81 adds "1" to the value of the group number counter N (S59), the process goes on to S52.

In contrast, in a case where the confirmation is completed (yes in S58), the determination unit 81 determines whether or not the value of the try number counter M is "3" (S60). In a case where the value of the try number counter M is not "3" (no in S60), the determination unit 81 sets "0" in the group number counter N and adds "1" to the try number counter M (S61), and the process goes on to S52.

In contrast, in a case where the value of the try number counter M is "3" (yes in S60), the determination unit 81 has carried out confirmation determination for three times memorized in the size information 50 for an application program, so that the allocation of a memory area is considered as a failure (S62), and the process is finished.

In such a manner, in a case where allocation of a memory area to store data used by the OS 60 is demanded, the information processing apparatus 10 determines whether or not the memories 21 in each group to group the memories 21 in each building block 11 have a vacancy for an application program. The information processing apparatus 10 allocates the memory area from the memory in the group determined to have a vacancy for an application program. This enables the information processing apparatus 10 to suppress a decrease in processing performance of an application program.

In addition, in the information processing apparatus 10, regarding the memories 21 provided in the building blocks 11, respective memories 21 having a lowest access latency to the CPUs 40 are grouped into respective separate groups. This enables the information processing apparatus 10 to configure groups for respective memories 21 having a low access latency.

Still in addition, in a case where there is no memory 21 in the group capable of securing the memory area, the information processing apparatus 10 carries out determination again by reducing the size of memory area to be secured for an application program. This enables the information processing apparatus 10 to secure more memory areas for an application program while starting up the OS 60 even in a case where there are fewer vacancies in the memory area and it is not possible to secure more memory areas to be secured for an application program.

In addition, every time allocation of a memory area is demanded in startup of the OS 60, the information processing apparatus 10 determines whether or not the memory area may be secured. Then, in a case where there is no memory 21 in the group determined to be capable of securing a memory area as a result of determination taking the size of memory area to be secured for an application program as zero, the information processing apparatus 10 cancels the allocation of a memory area to stop startup of the OS 60. Accordingly, in a case where it is not possible to secure the memory area to be secured for an application program, an administrator may carry out resetting to enable the information processing apparatus 10 to secure the memory area for an application program and start up the OS 60.

In addition, the information processing apparatus 10 carries out determination taking the size of memory area to be secured for an application program as zero regarding a group not including the CPU 40. This enables the information processing apparatus 10 to suppress securing of the memory area for an application program regarding the group not including the CPU 40.

### Second embodiment

Although descriptions have been given to an embodiment related to the disclosed apparatus, embodiments of the disclosed technique may be performed in a variety of different modes also other than the embodiment described above. With that, descriptions are given below to other embodiments included in the present disclosure.

For example, although a case where control of allocation of a memory area is carried out by the OS 60 is described in the above embodiment, the disclosed apparatus is not limited to this. For example, by giving a function of the memory management unit 64 in FIG. 5 to the OBP, the OBP may also control allocation and release of a memory area. In addition, in startup of the OS 60, the OBP may also carry out the control of allocation of a memory area until the OS 60 is ready to carry out the control of allocation of a memory area, and after that, the OS 60 may carry out the control of allocation of a memory area.

In addition, the above embodiment describes a case where, if it is not possible to secure a memory size to be left for an application program in carrying out the allocation of a memory area, the memory size to be left for an application program is reduced in further allocation of a memory area; the disclosed apparatus is not limited to this. For example, in a case where it is not possible to secure the memory size to be left for an application program, the memory size to be left for an application program may also be reduced to carry out the startup again from the start. For example, in a case where it is not possible to secure the memory size to be left for an application program for the first time, the information processing apparatus 10 carries out startup from the start with the memory size to be left for an application program for the second time. In addition, in a case where it is not possible to secure the memory size to be left for an application program for the second time, the information processing apparatus 10 may also carry out startup from the start with the memory size to be left for an application program for the third time.

In addition, although the above embodiment describes a case of applying the embodiment in startup of the OS 60, the disclosed apparatus is not limited to this. For example, the embodiment may also be applied when the OS 60 allocates a memory area to store data used in the OS 60 after startup.

In addition, each component of each illustrated apparatus is functionally conceptual and does not have to be physically configured as illustrated. That is, a specific condition of distribution and integration of each apparatus is not limited to the illustrations and all or part thereof may be configured by being functionally or physically distributed and integrated in an arbitrary unit in accordance with various types of loads, usages, and the like. For example, each processing unit of the determination unit 81 and the allocation unit 82 illustrated in FIG. 1 may also be integrated or separated appropriately.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A processing apparatus comprising:
a plurality of memories; and
a plurality of processors coupled to the plurality of memories and configured to:
determine, in accordance with a demand for allocation of a memory area of a first size to store first data used by an operating system, whether or not a memory area of a third size may be secured for each of the plurality of memories, the third size being obtained by adding the memory area of the first size and a memory area of a second size to store data used by an application program, and
store the first data in a first memory among the plurality of memories in a case where the first memory is determined to be capable of securing the memory area of the third size.

2. The processing apparatus according to claim 1, wherein,
among the plurality of processors, a first processor having a lowest access latency for the first memory executes the application program.

3. The processing apparatus according to claim 1, wherein the plurality of processors are configured to, in a case where any of the plurality of memories is determined to be incapable of securing the memory area of the third size, determine whether or not a memory area of a fifth size may be secured for each of the plurality of memories, the fifth size being obtained by adding a fourth size smaller than the second size and the first size.

4. The processing apparatus according to claim 1, wherein the plurality of processors are configured to:
carry out the determination at the time of startup of the operating system, and
stop startup of the operating system in a case where any of the plurality of memories is determined to be incapable of securing the memory area of the third size.

5. A program for causing a computer including a plurality of memories and a plurality of processors coupled to the plurality of memories to execute a process, the process comprising:
determining, in accordance with a demand for allocation of a memory area of a first size to store data used by an operating system, whether or not a memory area of a third size may be secured for each of the plurality of memories, the third size being obtained by adding the memory area of the first size and a memory area of a second size to store data used by an application program; and
storing the first data in a first memory among the plurality of memories in a case where the first memory is determined to be capable of securing the memory area of the third size.

6. The program according to claim 5, the process further comprising:
executing the application program by a first processor having a lowest access latency among the plurality of processors.

7. The program according to claim 5, the process further comprising:
in a case where any of the plurality of memories is determined to be incapable of securing the memory area of the third size, determining whether or not a memory area of a fifth size may be secured for each of the plurality of memories, the fifth size being obtained by adding a fourth size smaller than the second size and the first size.

8. The program according to claim 5, the process further comprising:
carrying out the determination at the time of startup of the operating system, and
stopping startup of the operating system in a case where any of the plurality of memories is determined to be incapable of securing the memory area of the third size.

9. A method executed by a computer including a plurality of memories and a plurality of processors coupled to the plural memories, the method comprising:
determining, in accordance with a demand for allocation of a memory area of a first size to store data used by an operating system, whether or not a memory area of a third size may be secured for each of the plurality of memories, the third size being obtained by adding the memory area of the first size and a memory area of a second size to store data used by an application program; and
storing the first data in a first memory among the plurality of memories in a case where the first memory is determined to be capable of securing the memory area of the third size.

10. The method according to claim 9, the method further comprising:
executing the application program by a first processor having a lowest access latency among the plurality of processors.

11. The method according to claim 9, the method further comprising:
in a case where any of the plurality of memories is determined to be incapable of securing the memory area of the third size, determining whether or not a memory area of a fifth size may be secured for each of the plurality of memories, the fifth size being obtained by adding a fourth size smaller than the second size and the first size.

12. The method according to claim 9, the method further comprising:
carrying out the determination at the time of startup of the operating system, and
stopping startup of the operating system in a case where any of the plurality of memories is determined to be incapable of securing the memory area of the third size.
